(19) **Europäisches Patentamt**

**European Patent Office**

**Office européen des brevets**

(11) **EP 1 736 058 A1**

(12) **EUROPEAN PATENT APPLICATION**

(43) Date of publication:
27.12.2006 Bulletin 2006/52

(51) Int Cl.:
*A23C 9/154* (2006.01)          *A23L 1/187* (2006.01)
*A23G 3/34* (2006.01)

(21) Application number: 06115452.2

(22) Date of filing: 14.06.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 15.06.2005 NL 1029255

(71) Applicant: **Campina Nederland Holding B.V.
5301 LB Zaltbommel (NL)**

(72) Inventors:
• **Kloek, William
5467 BR, Veghel (NL)**
• **Stehouwer, Floris
6701 AE, Wageningen (NL)**

(74) Representative: **van Westenbrugge, Andries
Nederlandsch Octrooibureau
Postbus 29720
2502 LS Den Haag (NL)**

(54) **Structure-retaining bakery product in a liquid or wet food composition**

(57) The invention relates to a food composition comprising a food component with a water activity greater than 0.7 and a bakery product, being a cake or biscuit, which is in contact with the food component and has a texture value of 1000-10,000 grams after storage for at least 22 days at 5°C. It is found that a baking formulation with a high protein/fat ratio, a low fat content and only a small amount of active baking powder constituents gives a bakery product that is less sensitive to shearing forces applied during processing and to attack by water that occurs during processing and storage in a liquid or wet food medium, so that the visual and organoleptic recognizability of the bakery product is greatly improved.

EP 1 736 058 A1

**Description**

BACKGROUND OF THE INVENTION

The present invention relates to a food composition that comprises a food component with a water activity greater than 0.7 and at least one bakery product that remains visually and organoleptically recognizable for a long time, and to a process for the production of this food composition.

It is considered desirable in food technology to keep the pieces of cake inserted into a food product, such as desserts or drinks, recognizable until the sell-by date, which in practice means four weeks.

Recognizability by visual and organoleptic means are the most important forms of recognition in this connection. In the first case, it is mostly the size of the pieces of cake that matters, while in the second case it is mostly the mouth-feel and the taste experience of the pieces in the food product.

At present, the available water-containing food products incorporate either too small pieces of a cake or biscuit, or the pieces of cake or biscuit in them do not have the right mouth-feel. The pieces of cake or biscuit are small due to the strong shearing forces exerted on them during heating and processing. For example, they may disintegrate into small, unrecognizable fragments during stirring or a pumping operation.

The mouth-feel will be unsatisfactory or it will rapidly deteriorate if the pieces of cake or biscuit absorb moisture during heating or in another processing step carried out first in a humid or wet environment, as they will then absorb moisture from the aqueous medium of the food product, which undermines the structure of the pieces of cake or biscuit. The structure of the latter can be attacked when an important structural element such as sugar dissolves or when structural ingredients such as proteins and starch swell, the organoleptic recognizability of the pieces of cake or biscuit being reduced in both cases.

It has been attempted before to prevent the swelling and the loss of organoleptic recognizability of the pieces of cake or biscuit by coating them with a layer that acts as a barrier to moisture. For example, WO-A- 03/007736 describes a barrier to moisture in the form of a continuous fat layer containing certain particles, such as silica particles, which are insoluble both in water and in fats. This fat layer contains at least 30% of hard fat at a temperature of 10°C.

According to GB-A-2,084,849, it is possible to improve the stability of the crumb structure of the cake in chilled desserts having a high water content by drying the cake crumbs measuring 2-10 mm and then coating them with a layer of fat that constitutes less than 16% of the weight of the cake crumbs.

However, such barriers to moisture do not solve the problem of the crumbling of the pieces of cake or biscuit into unrecognizable small fragments when strong shearing forces are applied to them during heating, and the presence of such small fragments is even deemed desirable in the above British Patent Application. Moreover, fat-based layers often show cracks or other defects, in addition to which an extra fat, especially hard fat, is often undesirable in food.

There is therefore a need for a method of making the pieces of cake or biscuit less sensitive both to shearing forces and to water in order to improve their recognizability in liquid or wet food products, especially desserts.

DESCRIPTION OF THE INVENTION

A cake formulation has now been developed for a product that is less sensitive both to shearing forces during processing and to attack by water during processing and residence in a liquid or wet food product, in order to improve greatly the visual and organoleptic recognizability of the bakery product in question. It has been found that this can be achieved with the aid of a bakery product formulation that contains a large proportion of proteins in relation to fats and preferably has a low fat content, and especially if only a small amount of active baking powder components is used in the preparation of the bakery product.

The present invention therefore relates to a food composition that contains a food component with a water activity greater than 0.7 and a bakery product that is in contact with it and has a texture value of 1000-10,000 grams after storage for at least 22 days at 5°C.

The present invention also relates to a food composition that contains a food component with a water activity greater than 0.7 and a bakery product that is in contact with it, where the bakery product has a fat content of less than 10 wt%, calculated on the weight of the baked bakery product and a protein/fat ratio of at least 0.8:1 by weight.

The present invention also relates to a food composition that contains a food component with a water activity greater than 0.7 and a bakery product that is in contact with it, wherein the bakery product has an initial texture value of 10,000-50,000 grams and loses at most 90% of its initial texture value after storage for at least 22 days at 5°C.

The invention also relates to a process for the preparation of such a food product.

The water activity $a_w$ is the usual measure of the amount of free water present in a product. It can be measured with the aid of an $a_w$-meter (Aqualab series 3TE from Decagon Devices Inc., USA), which determines the relative humidity of the air around the product after equilibrium has been established between the product and the air around it. As a reference, the $a_w$ value of water at the given temperature is taken to be 1. Since the moisture uptake is greater for products with a high water activity, the invention is especially relevant to food components with a water activity of at least 0.7, preferably at least 0.75, especially at least 0.8, and most of all at least 0.85.

The bakery product according to the invention is a cake or biscuit, soft or ordinary, and will be described below in the case of the best formulation. Whenever the term "bakery product" is used below, it is a baked bakery product that is meant, while the unbaked mixture that has not risen yet is called a "bakery mixture".

With a "food composition" according to the invention preferably a composite food product of different food items is understood. The "food components" are thus preferably identifiable as separate foodstuffs rather than food ingredients.

In the first embodiment of the present invention, the food composition has a layered structure, and at least part of the surface of the bakery product carries a layer of a food component. This can be for example chocolate, jam or a dairy product, but is not restricted thereto.

In the second embodiment of the present invention, the food composition comprises a dispersion of pieces or particles of a bakery product in the food component. In such an embodiment, the food component is preferably a dessert, such as blancmange, yoghurt, custard, a sweet or sour sauce (e.g. a fruit sauce), milk, condensed milk, mousse, liqueur, alcohol, whipped cream, cottage cheese, Bavarian cream, crème brulée, compote or any other food composition that is recognized by the consumer as a component of a dessert, provided that this component has a high water activity, as specified above. The food component preferably contains a dairy product, i.e. one containing at least 50 wt% of milk-derived components.

To prepare this dispersion, the bakery product is comminuted, e.g. by cutting, preferably to pieces with an average size of 5-30 mm and especially 10-20 mm. In another embodiment, the bakery mixture is first divided into the desired portions, and these are then baked. The actual size and shape of the pieces are mainly chosen to match the desired visual and organoleptic characteristics of the bakery product in the final food composition. The pieces cannot be larger than the maximum size that is still pumpable in the later processing stages and in the packaging of the food composition. If on the other hand the pieces of bakery product are too small, their structure or recognizibility may disappear, and the pieces may be regarded by the consumer as just crumbs. The food composition preferably contains 0.1-50 wt% of a bakery product and more preferably 1-20 wt% of it, calculated on the weight of the fmal food composition.

In all the embodiments of the present invention, the bakery product is subjected to a heat treatment before it is incorporated in the food composition, in order to minimize its initial microbial count and so increase its microbiological shelf life.

This heating stage can include a treatment in a sugar solution at an elevated temperature, which is called "sugar treatment" below. In this treatment, the bakery product is brought into contact with a sugar preparation by stirring. The mixture is generally stirred at a shear velocity of 45-200 per second, which is estimated from the following equation:

$$\text{Shear velocity} = 2 \times \text{rotation speed} / [1 - (r_{\text{rotor blade}}/r_{\text{container}})^{2}]$$

where the shear velocity has the units of second$^{-1}$, the rotation speed is expressed in radians/sec, $r_{\text{rotor blade}}$ is half the span of the rotor blade used, and $r_{\text{container}}$ is the radius of the container in which the mixture of the bakery product and the sugar preparation is processed.

The sugar preparation itself is a water/sugar mixture, wherein the amount of sugars is 40-80 wt% of the total weight of the sugar preparation. Suitable sugars for this purpose are glucose, fructose and sucrose. Commercial granulated sugar is a suitable source of sugars for the sugar preparation. The ratio between the bakery product and the sugar preparation is preferably between 1:1 and 1:10.

The term "elevated temperature" used for the sugar treatment means a temperature between 85 and 140°C. In practice, the temperature depends to a great extent on the time during which the bakery product is heated (i.e. heating time of the bakery product) and on the pH of the food component that will later be brought into contact with the bakery product. If the pH of the food component is 4.6 or higher, it is preferred that the time of heating is 1-5 minutes and more preferably 2-4 minutes at 120-140°C. If the pH of the food component is below 4.6, then a less intense treatment is sufficient, in which case the mixture is heated preferably for 0.5-3 minutes, more preferably for 1-2 minutes at 100-120°C, most preferably at 85-120°C for 5-15 minutes.

Owing to the improved strength or sturdiness of the bakery product according to the invention, the sugar treatment does not have any detrimental effect on the size and shape of the pieces at the shear velocities used. The size of the pieces of the heated bakery product in the final food composition is therefore not considered to be significantly different from the size they had before this treatment.

A bakery product subjected to such a sugar treatment is discernible in the food composition by the fact that its pores contain sugars from the sugar preparation after the heat treatment. On the other hand, the sugars used in the baking process itself will have partially reacted with the components of the baking product, due to the much higher temperatures and longer heating times used for baking.

Due to the heating stage, the bakery product and pieces of it remain recognizable for at least 22 days at 5°C when incorporated in the food composition according to the invention. This means that their texture, shape, size and organoleptic properties (i.e. their perception by the consumer as pieces of cake) will be retained during this time.

The bakery product that has been present in a food composition for 22 days at 5°C has a texture value of 1000-10,000 grams and preferably 1500-5000 grams, as measured with the aid of a Texture Analyser TA-XT2 of Stable Micro Systems, Surrey, UK. The texture value is a measure of the firmness of bakery goods: the higher this value, the firmer and more structure-retaining is the bakery product. A texture value exceeding 10,000 grams indicates a too firm bakery product that is no longer clearly recognizable organoleptically as cake or biscuit in the food composition in question.

To determine the texture value, a transparent cylinder with a diameter of 38 mm and a height of 20 mm is pressed into the bakery product to a depth of 5 mm at a rate of 2.0 mm/sec, and the measurement is taken at a rate of 0.2 mm/sec, the other parameters of the determination being as follows: time = 30 sec, "trigger" = 3 g, PPS = 100, and temperature of the bakery product is 5°C. The texture value indicates the resistance to penetration experienced by the cylinder beyond 5 mm, expressed in terms of grams.

## Bakery product

The bakery product according to the invention is a cake or biscuit with a high protein/fat ratio, preferably a low fat content, and a spongy structure, which is retained both during the heating stage and for a long time afterwards in the food composition according to the invention.

It has now been found that the normal cake formulation of sugar, flour, eggs and butter in proportional amounts does not give a suitable bakery product for the present purposes, nor do variations in the flour content or formulations largely based on fat. However, the recognizability and firmness of the bakery product can be improved by choosing a formulation with a high protein/fat ratio, preferably a low fat content, and especially only a small amount of active baking powder components. The formulation for such bakery products is largely based on the recipe for a Swiss roll, and more specifically a "dense" form thereof, the so called "dense Swiss roll", because the amounts and proportions of protein, baking powder and/or fat are different for this product.

The bakery product according to the invention has a protein/fat ratio of at least 0.8:1 by weight and preferably at least 1:1 by weight. This ratio can be achieved by raising the amount of protein, especially the amount of heat-coagulating protein, in the formulation and/or reducing the amount of fat in it. Fats include at least all the mono-, di- and triglycerides, whether or not they are esterified with organic acids, together with any phospholipids and cholesterol present in the formulation.

The bakery mixture generally contains about 38% of water, of which 25 $\pm$ 2% evaporates during the baking process.. The protein and fat contents of the bakery product specified in the context of the invention are therefore based on the total weight of the bakery product, including a water content of 13 wt%. The amounts of protein and fat needed in the bakery mixture can therefore be calculated by multiplying by 13/38 the amount of fat and protein the product is required to have at the end.

The bakery product preferably contains at least 3 wt% and especially 5-20 wt% of protein, calculated on the total weight of the bakery product with a water content of 13 wt%.

The greater part of the proteins present in the bakery product is formed by heat-coagulating globular proteins. The heat-coagulating globular proteins preferably constitute more than 40 wt%, preferably more preferably more than 50 wt%, and especially more than 60 wt% of the proteins. It is especially proteins of animal origin, such as those present in whey and eggs, that contain such globular proteins which form a gel network when heated, but proteins of plant origin, such as soy bean protein, also contain them. Egg protein is normally preferred for making cakes in current practice. In the food composition according to the invention, however, heat-coagulating proteins from another source, such as whey protein from cow's milk, are also suitable, or they are even desirable because of their different taste. The preferred kinds are whey protein and egg protein (or a combination of the two), but egg protein is preferred in particular. The bakery product of the invention preferably contains 2-20 wt%, and more preferably 3-12 wt% of heat-coagulating proteins, especially whey and/or egg proteins, calculated on the weight of the bakery product with a water content of 13 wt%.

In a preferred embodiment of the present invention, egg-based proteins are used to provide the bakery product with the required texture, and they are added in the form of whole eggs, in powder or liquid form. About 40-45 wt% of the solids in whole eggs is formed by fats and about 45-48 wt% by proteins. More than 70% of the egg proteins is made up of heat-coagulating proteins, predominantly ovalbumin and to a lesser extent conalbumin (ovotransferrin) and ovomucoid. Heat-coagulating egg proteins provide compactness, while fats and lecithin present in the yolk promote softness. Albumins then preferably constitute more than 50 wt% of the proteins present in the bakery product.

The bakery product according to the invention preferably contains less than 10 wt% and especially less than 8 wt% of fat, calculated on the weight of the baked bakery product with 13 wt% of water. A high fat content makes the bakery product more sensitive to shearing forces and water. One of the suitable sources of fats is widely available cake margarine.

If whole eggs are used for preparing the bakery product, egg fat is automatically included, and for that reason preferably no fat from other sources is added.

It has been found that the use of little or no leavening agent like baking powder also has a desirable effect on the texture and recognizability of the bakery product. The bakery mixture according to the invention therefore contains less than 0.2 wt% and preferably less than 0.1 wt% of baking powder (in terms of the active constituents of thebaking powder), such as sodium bicarbonate and acid sodium pyrophosphate or other leavening agents such as potassium carbonate and ammonium carbonate (for comparison, 0.4-0.5 wt% of these substances is normally used in the art). These amounts are calculated on the whole composition of the bakery mixture. The baking powder decomposes partly or wholly during baking, so that little or no baking powder can be recovered from the baked bakery product.

It has also been found that, for the best results, one has to adhere to an inverse relationship between the maximum fat content and the maximum baking powder content, more specifically in accordance with the equation $y=15-50x$, where $x$ is the baking powder content $\leq 0.3$ wt% of the bakery mixture, and $y$ is the maximum fat content of the baked bakery product in weight%. The bakery product therefore preferably has a fat content that lies on or below the line for the above equation. The operative equation in particular is $y \leq 12.5 - 50x$, especially in conjunction with $y \leq 10$. The conversion factor mentioned before can be used to calculate the suitable fat content in the preparation stage.

The bakery product also contains at least flour and sugar, and possibly also colouring and flavouring agents. The person skilled in the art can easily determine the amounts of these, together with the exact baking conditions. Apart from the conventional baking process conducted in an oven, alternative baking processes, such as microwave heating, can also be used in the present invention. An additional advantage of microwave heating of the cake batter is that the handling of the baked cake layer is reduced. The cake piece can be directly combined with the dairy product. The food composition shows an enhanced shelf life.

EXAMPLES

**Example 1 - Dense Swiss roll with 6.3 wt% of fat and no baking powder**

Example 1a - Preparation of a dense Swiss roll

A cake mixture was prepared in the following way.

1) 238 g of whole-egg powder (from Nivé B.V. in Nunspeet, Netherlands) was dissolved slowly and carefully in the course of 4 minutes in 762 g of water at 40°C to minimize the incorporation of air, using a Hobart mixer fitted with a guard and set in position I;

2) A pre-mixed powder composition described below was dissolved in the solution of whole-egg powder prepared in Step 1 above, using a Hobart mixer with a butterfly stirrer for 1 minute in position I, the powder composition consisting of 500 g of granulated sugar (from Suikerunie in Netherlands), 500 g of flour (from IJsvogel, Meneba in Rotterdam, Netherlands) and 5 g of table salt.

The above mixture was placed on a baking tin lined with baking parchment, with the mixture forming a 0.7 cm thick layer. The tin was placed in a Probat confectionery oven without hot-air circulation for 60 minutes, the temperature above and below the baking tin being 150 and 170°C, respectively. To ensure that the product was fully baked, it was turned over and baked for another 30 minutes under the same conditions. This gave a dense Swiss roll with 6.3 wt% of fat, from the whole eggs, and a protein content of 7.1 %. This product was cooled and cut into cubes with edges measuring 0.7 cm, using a serrated knife

Example 1b - Heat treatment of the dense Swiss roll

500 g of these cake pieces and 2000 g of a 60 wt% sugar solution were heated up to 85°C and held at this temperature for 10 minutes in a water bath in a 5-litre vessel made of stainless steel and fitted with a fence-shaped stirrer and a lid. The dispersion thus obtained was cooled to 20°C and decanted. The stirring was effected at a speed of 60 rpm while the mixture was being heated, maintained at elevated temperature and cooled, and the shear velocity during the treatment was about 46 per $second^{-1}$.

Example 1c - Preparation of a cake-containing food composition

Fifty heat-treated cake pieces obtained in Steps 1a and 1b above were introduced into a cup, and 100 ml of custard ("Vla" from Campina, Netherlands) was added, the mixture being stirred with a tablespoon until the cake pieces had been thoroughly distributed in the custard.

**Example 2 - Dense Swiss roll with 6.3 wt% of fat and 0.2 wt% of baking powder**

Example 2a - Preparation of a dense Swiss roll

The method described in Example 1a was used to prepare a dense Swiss roll with 6.3 wt% of fat in the baked bakery product and with 0.2 wt% of baking powder in the baking mixture, except that 2 g of sodium bicarbonate and 2.78 g of sodium hydrogen pyrophosphate were added in the first step of mixing the dry ingredients.

Example 2b - Heat treatment of the dense Swiss roll

The cake obtained in Example 2a was subjected to a heat treatment as described in Example 1b.

**Example 3 (comparative example) - Dutch Cake with 22.4 wt% of fat and no baking powder**

Example 3a - Preparation of a Dutch Cake

A cake mixture was prepared in the following way.

1) 119 g of whole-egg powder (from Nivé B.V. in Nunspeet, Netherlands) were dissolved slowly and carefully in the course of 4 minutes in 381 g of water at 40°C to minimize the incorporation of air, using a Hobart mixer fitted with a guard and set in position I.
2) A pre-mixed powder composition described below was dissolved in the solution of whole-egg powder prepared in Step 1 above, using a Hobart mixer with a butterfly stirrer for 1 minute in position I, the powder composition consisting of 500 g of granulated sugar (from Suikerunie in Netherlands), 500 g of flour (from IJsvogel, Meneba in Rotterdam) and 5 g of table salt.

The above mixture was placed on a baking tin lined with baking parchment, with the mixture forming a 0.7 cm thick layer. The tin was placed in an oven without hot-air circulation for 60 minutes, the temperature above and below the baking tin being 150 and 170°C, respectively. To ensure that the product was fully baked, it was turned over and baked for another 30 minutes under the same conditions. This gave a Dutch cake with 22.4 wt% of fat (20 wt% from margarine and the remaining part from whole eggs) and a protein content of 4.8%.

Example 3b - Heat treatment of the Dutch Cake

The Dutch Cake prepared in Example 3a was subjected to a heat treatment as described in Example 1b.

Example 3c - Preparation of a cake-containing food composition

The Dutch Cake prepared in Example 3b was introduced into a food composition, as described in Example 1c.

**Example 4 (comparative example) - Dutch Cake with 22.4 wt% of fat and 0.2% of baking powder**

Example 4a - Preparation of a Dutch Cake

The method described in Example 3a was used to prepare a Dutch cake with 22.4 wt% of fat in the baked bakery product and with 0.2 wt% of baking powder in the baking mixture, except that 2 g of sodium bicarbonate and 2.78 g of sodium hydrogen pyrophosphate were added in the first step of mixing the dry ingredients.

Example 4b - Heat treatment of the Dutch Cake

The Dutch Cake obtained in Example 4a was subjected to a heat treatment as described in Example 1b.

**Evaluation**

The pieces of the cakes prepared in Example 1b (with heat treatment), in Example 1c (with heat treatment and incorporation in custard) and in Example 3c (with heat treatment and incorporation in custard) were stored for 22 days at 5°C. The texture value was determined on a piece of cake at time 0 and after 1, 6, 10, 14, 17 and 22 days using a Texture Analyser TA-XT2 (from Stable Micro Systems, Surrey, UK) under the conditions described above. The results shown in Table 1 indicate that after 22 days the pieces prepared in Comparative Example 3c were mushy and present in a completely disintegrated state, giving a texture value of 0g, while the pieces of the dense Swiss roll prepared in Example 1c were still intact, with a texture value stabilizing at around 4500 g.

**Table 1 - Comparison of the texture values in the course of time**

| Day | Ex. 1b | Ex. 1c | Ex. 3c |
|-----|--------|--------|--------|
| 0 | 24365 | 24365 | 1590 |
| 1 | 28243 | 11629 | Not determined |
| 6 | 28695 | 3402 | 261 |
| 10 | 21404 | 4284 | 222 |
| 14 | 18838 | 4610 | 213 |
| 17 | 18443 | 4218 | 0 (not measurable) |
| 22 | 20307 | 4807 | 0 (not measurable) |

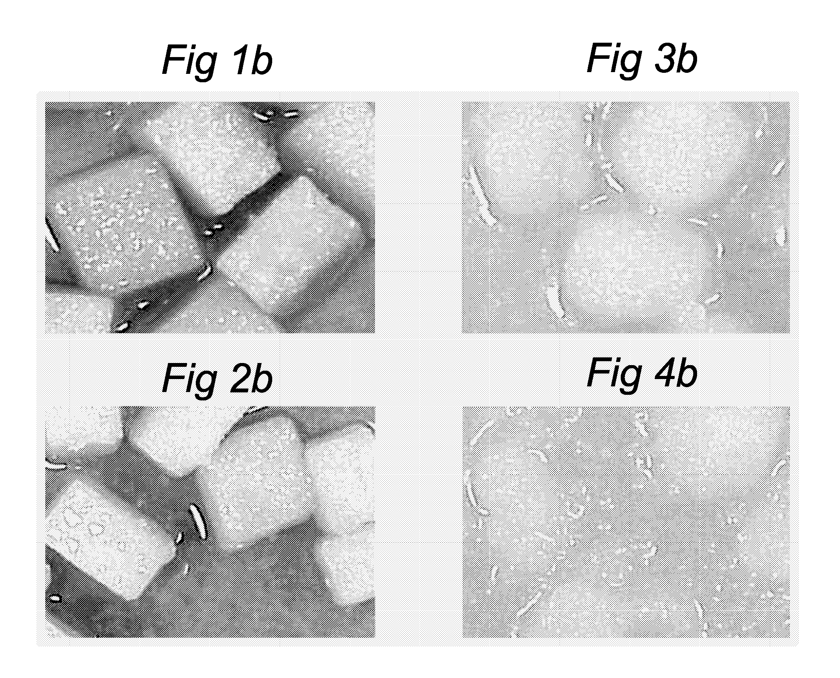

The pieces of cake prepared in Examples 1b, 2b, 3b and 4b were photographed immediately after the heat treatment to detect any change in their visual recognizability. The photographs shown in Fig. 1 prove that the pieces of cakes prepared in Examples 1b and 2b were still visually recognizable, but those prepared in Examples 3b and 4b were hardly visible any more.

**Claims**

1. Food composition comprising a food component with a water activity higher than 0.7 and a bakery product that is in contact with it and has a texture value of 1000-10,000 grams after storage for at least 22 days at 5°C.

2. Food composition according to claim 1, in which the bakery product has a fat content that lies on or below the line $y = 15 - 50x$, where x is the amount of baking powder of at most 0.3 wt% in the bakery mixture used for preparing the bakery product, and y is the fat content of the baked bakery product in weight%.

3. Food composition according to claim 1 or 2, in which the fat content of the bakery product is less than 10 wt%, calculated on the weight of the baked bakery product.

4. Food composition according to any one of claims 1-3, in which the bakery product contains less than 0.2 wt% of baking powder, calculated on the composition of the baking mixture.

5. Food composition according to any one of claims 1-4, in which the protein content of the bakery product is 5-20 wt%, calculated on the weight of the baked bakery product.

6. Food composition according to any one of claims 1-5, in which the bakery product has a protein/fat ratio of at least 0.8 : 1 by weight.

7. Food composition according to any one of claims 1-6, in which the food component contains a dairy product.

8. Food composition according to any one of claims 1-7 comprising a dispersion of pieces of a bakery product in the food component.

9. Food composition comprising a food component with a water activity greater than 0.7 and a bakery product in contact with it, where the bakery product has a fat content of less than 10 wt%, calculated on the weight of the baked bakery product, and a protein/fat ratio of at least 0.8 : 1 by weight.

10. Process for the preparation of a food composition comprising a food component with a water activity greater than 0.7 and a bakery product in contact with it, where a bakery product is prepared by baking a baking mixture containing a combination of fat and baking powder in an amount that lies on or under the line $y = 15 - 50x$, where x is the baking powder content of the baking mixture and is 0.3 wt% or less of the bakery mixture, and y is the fat content of the baked bakery product in weight%, and wherein said baked bakery product is brought into contact with the food component.

Fig 3b

Fig 4b

Fig 1b

Fig 2b

**European Patent**
**Office**

**PARTIAL EUROPEAN SEARCH REPORT**     **Application Number**

which under Rule 45 of the European Patent Convention EP 06 11 5452
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 03/007736 A (FRIESLAND BRANDS B.V; BASTIAANS, JOHANNES, ADRIANUS, HENRICUS, PETRUS;) 30 January 2003 (2003-01-30) * the whole document * ----- | 1-10 | INV. A21D13/08 A23C9/154 A23L1/187 A23G3/34 |
| A,D | GB 2 084 849 A (GENERAL FOODS CORP) 21 April 1982 (1982-04-21) * the whole document * ----- | 1-10 | |

| TECHNICAL FIELDS SEARCHED (IPC) |
|---|
| A21D A23C A23L A23G |

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 1 September 2006 | Heirbaut, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C07)

| | | Application Number |
|---|---|---|
| **European Patent**<br>**Office** | **INCOMPLETE SEARCH**<br>**SHEET C** | EP 06 11 5452 |

Claim(s) searched incompletely:
   1

Reason for the limitation of the search:

Present claim 1 relates to a food composition which has a given desired
property or effect, namely have a texture value of 1 000-10 000 grams
after storage for at least 22 days at 22°C. However, the description does
not provide support and disclosure in the sense of Article 84 and 83 EPC
for any such food compositionhaving the said property or effect and there
is no common general knowledge of this kind available to the person
skilled in the art. This non-compliance with the substantive provisions
is to such an extent, that a meaningful search of the whole claimed
subject-matter of the claim could not be carried out (Rule 45 EPC and EPO
Guidelines B-VIII, 3).

The search of claim 1 was consequently restricted to the specifically
disclosed food composition having the desired property or effect, see
claims 2-10.

## ANNEX TO THE EUROPEAN SEARCH REPORT
## ON EUROPEAN PATENT APPLICATION NO.

EP 06 11 5452

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2006

| Patent document cited in search report | | Publication date | Patent family member(s) | | Publication date |
|---|---|---|---|---|---|
| WO 03007736 | A | 30-01-2003 | CA | 2454317 A1 | 30-01-2003 |
| | | | CN | 1535117 A | 06-10-2004 |
| | | | EP | 1408778 A1 | 21-04-2004 |
| | | | HR | 20040036 A2 | 30-06-2004 |
| | | | HU | 0401045 A2 | 28-09-2004 |
| | | | JP | 2005505263 T | 24-02-2005 |
| | | | NL | 1018607 C2 | 21-01-2003 |
| | | | NZ | 530643 A | 25-11-2005 |
| | | | US | 2004241287 A1 | 02-12-2004 |
| GB 2084849 | A | 21-04-1982 | NONE | | |

EPO FORM P0459

For more details about this annex : see Official Journal of the European Patent Office, No. 12/82

## REFERENCES CITED IN THE DESCRIPTION

**Patent documents cited in the description**

- WO 03007736 A

- GB 2084849 A